# EUROPÄISCHE PATENTSCHRIFT

(11) **EP 4 186 347 B1**
(45) Veröffentlichungstag und Bekanntmachung des Hinweises auf die Patenterteilung: **21.02.2024**
(21) Anmeldenummer: 21210473.1
(22) Anmeldetag: 25.11.2021
(51) Int. Cl.: A01D 34/74

(54) **SELBSTFAHRENDES ARBEITSGERÄT**
SELF-PROPELLED WORK DEVICE
APPAREIL DE TRAVAIL AUTONOME

(43) Veröffentlichungstag der Anmeldung: 31.05.2023
(73) Patentinhaber: Andreas Stihl AG & Co. KG, 71336 Waiblingen (DE)
(72) Erfinder: Gassner, Markus, 6345 Kössen (AT); Kugler, Robert, 6330 Kufstein (AT); Belatto, Alberto, 6094 Axams (AT); Wohlfrom, Christoph, 73540 Heubach (DE)
(74) Vertreter: Reinhardt, Annette

(56) Entgegenhaltungen:
- CN-A- 107 996 124
- US-A1- 2017 181 375
- US-A1- 2020 170 186

## Beschreibung

Die Erfindung betrifft ein selbstfahrendes Arbeitsgerät der im Oberbegriff des Anspruchs 1 angegebenen Gattung.

Aus der CN 107 996 124 A ist ein Rasenmäher mit einer Einstellvorrichtung für das Werkzeug bekannt, die einen Stellmotor und ein Stellrad umfasst. Das Stellrad weist einen Exzenterzapfen auf, der in eine Aufnahme für den Motor eingreift.

Der Erfindung liegt die Aufgabe zugrunde, ein selbstfahrendes Arbeitsgerät der gattungsgemäßen Art zu schaffen, bei dem die Position des Werkzeugs einfach erfassbar ist.

Diese Aufgabe wird durch ein selbstfahrendes Arbeitsgerät mit den Merkmalen des Anspruchs 1 gelöst.

Erfindungsgemäß ist eine Erfassungseinrichtung zur Erfassung der Höhenlage des Werkzeugs vorgesehen. Die Erfassungseinrichtung umfasst Kodierelemente an einem Stellrad und mindestens ein Erfassungsmittel. Das mindestens eine erste Kodierelement für die erste Endlage unterscheidet sich dabei von dem mindestens einen zweiten Kodierelement für die zweite Endlage.

Kodierelemente und Erfassungsmittel lassen auf einfache Weise eine Erfassung der Höhenlage des Werkzeugs zu. Dadurch, dass sich die Kodierelemente für die erste Endlage und für die zweite Endlage voneinander unterscheiden, können die Endlagen eindeutig von dem mindestens einen Erfassungsmittel erfasst werden. Die Höhenlage des Werkzeugs kann auf einfache Weise durch Erkennung einer Endlage und Ermittlung der Position des Werkzeugs ausgehend von dieser Endlage, beispielsweise über weitere Kodierelemente, erfolgen.

Ein einfacher Aufbau und eine genaue Erkennung der Höhenlage einschließlich der Erkennung der Endlagen wird erreicht, wenn zwei Erfassungsmittel vorgesehen sind, die in vorgegebenem Abstand zueinander angeordnet sind. Dadurch, dass zwei Erfassungsmittel vorgesehen sind, ist eine einfache Ausbildung der Kodierelemente, beispielsweise über unterschiedliche Längen der Kodierelemente in Umfangsrichtung, möglich. In Abhängigkeit davon, ob ein Erfassungsmittel oder beide Erfassungsmittel mindestens ein Kodierelement erfassen, können Kodierelemente unterschiedlicher Längen auf einfache Weise erkannt werden.

In einfacher Gestaltung sind die Kodierelemente durch Vorsprünge oder das Fehlen von Vorsprüngen gebildet. Die zwischen den Vorsprüngen gebildeten Lücken werden von dem mindestens einen Erfassungsmittel ebenso erfasst wie die Vorsprünge. Durch geeignete Anordnung der Vorsprünge und der Lücken zwischen den Vorsprüngen ist eine einfache Kodierung möglich.

In einfacher Gestaltung sind die Erfassungsmittel optische Erfassungsmittel. Optische Erfassungsmittel sind insbesondere Laserlichtquellen sowie geeignete zugeordnete Empfänger. Auch andere Arten von Erfassungsmitteln, beispielsweise magnetische Erfassungsmittel wie Hallsensoren, die mit Magneten zusammenwirken, mechanische Schalter, elektrische Kontakte, beispielsweise Schleifkontakte und zugeordnete Betätigungselemente können jedoch vorteilhaft sein. Die Magnete, Betätigungselemente oder dgl. bilden dabei die Kodierelemente.

Um eine genaue Positionierung von Stellrad und Erfassungsmittel zu erreichen, ist vorteilhaft vorgesehen, dass das Stellrad und das mindestens eine Erfassungsmittel fest mit einem einteilig ausgebildeten Führungsteil verbunden sind. Vorteilhaft ist das Stellrad unmittelbar in dem Führungsteil gelagert. Die Erfassungsmittel sind vorteilhaft an einem gemeinsamen Bauteil fixiert, dessen Position gegenüber dem Führungsteil zum Ausgleich von Toleranzen einstellbar ist. Dadurch werden Fertigungstoleranzen zwischen Stellrad und Erfassungsmittel auf einfache Weise minimiert. Dadurch wird eine genaue Erfassung der Höhenlage des Werkzeugs ermöglicht.

Vorteilhaft umfasst die Einstellvorrichtung ein von dem Stellmotor angetriebenes Schneckenrad. Das Schneckenrad ist bevorzugt an dem Führungsteil gelagert. Auch eine andere Anordnung des Schneckenrads kann jedoch vorteilhaft sein. Das Schneckenrad greift bevorzugt in das Stellrad ein. Schneckenrad und Stellrad bilden demnach ein einstufiges Getriebe. In alternativer Ausführung kann auch ein mehrstufiges Getriebe vorgesehen sein, das die Drehbewegung des Schneckenrads auf das Stellrad überträgt. In bevorzugter Gestaltung ist das Stellrad als Stirnrad ausgebildet.

Der Antriebsmotor ist an dem Chassis vorteilhaft über mindestens eine, insbesondere über zwei Linearführungen geführt. Dadurch wird ein Verkippen des Antriebsmotors gegenüber dem Chassis verhindert. Bevorzugt lässt eine Linearführung eine Bewegung des Antriebsmotors gegenüber dem Chassis quer zur Längsrichtung der Linearführung zu. Diese Linearführung ist demnach als Loslager ausgebildet. Die Bewegung des Antriebsmotors gegenüber dem Chassis quer zur Längsrichtung der Linearführung kann beispielsweise zum Ausgleich von Fertigungstoleranzen oder zum Ausgleich von Längenänderungen der Bauteile unter Temperatureinfluss vorgesehen sein. Die andere Linearführung ist bevorzugt als Festlager ausgebildet und lässt keine Bewegung des Antriebsmotors gegenüber dem Chassis quer zur Längsrichtung der Linearführung zu.

Der Antriebsmotor ist vorteilhaft in einer Motoraufnahme angeordnet. Die Motoraufnahme kann beispielsweise einen nach oben offenen Aufnahmetopf aufweisen, in dem der Antriebsmotor angeordnet ist. Eine einfache Ausführung ergibt sich, wenn die Motoraufnahme einen elastischen Abschnitt aufweist, der sich an der Linearführung abstützt. Vorteilhaft verformt sich der elastische Abschnitt bei einer Bewegung der Motoraufnahme gegenüber dem Chassis quer zur Längsrichtung der Linearführung. Führt die Motoraufnahme eine Bewegung gegenüber dem Chassis quer zur Längsrichtung der Linearführung aus, so nimmt der elastische Abschnitt diese Querbewegung durch Verformung auf. Eine solche Bewegung quer zur Längsrichtung der Linearführung kann sich beispielsweise aufgrund von Längenänderungen durch Temperaturänderungen ergeben. Der elastische Abschnitt ist insbesondere einteilig an der Motoraufnahme ausgebildet. Besonders vorteilhaft ist der elastische Abschnitt durch entsprechend dünnwandige Gestaltung von Bereichen der Motoraufnahme gebildet. Dadurch wird ein einfacher Aufbau mit wenigen Einzelteilen erreicht. Die Linearführung ist vorteilhaft an dem Führungsteil ausgebildet.

Die Drehachse des Stellrads verläuft bevorzugt senkrecht zur Verstellrichtung der Einstellvorrichtung. Das Stellrad ist insbesondere in einem Abstand zu seiner Drehachse mit dem Antriebsmotor gekoppelt. Aufgrund der Kopplung in einem Abstand zur Drehachse ist eine Verstellung der Position des Antriebsmotors und damit der Position des Werkzeugs über einen Exzenterzapfen oder dergleichen möglich. Dadurch wird ein einfacher Aufbau und eine vorteilhafte Verstellung erreicht.

Ein Ausführungsbeispiel der Erfindung wird im Folgenden anhand der Zeichnung erläutert. Es zeigen:
- Fig. 1: eine schematische Darstellung eines selbstfahrenden Rasenmähers in Draufsicht,
- Fig. 2: einen schematischen Längsschnitt des Rasenmähers aus Fig. 1,
- Fig. 3: eine perspektivische Darstellung von Antriebsmotor, Motoraufnahme und Einstellvorrichtung in einer unteren Endlage der Motoraufnahme,
- Fig. 4: eine Seitenansicht der Anordnung aus Fig. 3,
- Fig. 5: eine Draufsicht in Richtung des Pfeils V in Fig. 4,
- Fig. 6: eine Seitenansicht in Richtung des Pfeils VI in Fig. 5,
- Fig. 7: einen Schnitt entlang der Linie VII-VII in Fig. 6,
- Fig. 8: einen Schnitt entlang der Linie VIII-VIII in Fig. 7,
- Fig. 9: den Bereich des Gleitstücks und der Führung aus Fig. 8 in vergrößerter Darstellung,
- Fig. 10: einen Schnitt entlang der Linie X-X in Fig. 7,
- Fig. 11: eine Schnittdarstellung entsprechend Fig. 8 in mittlerer Position der Motoraufnahme,
- Fig. 12: einen Schnitt entlang der Linie XII-XII in Fig. 11,
- Fig. 13: einen Schnitt entlang der Linie XIII-XIII in Fig. 12,
- Fig. 14: eine Schnittdarstellung entsprechend Fig. 8 in oberster Endlage der Motoraufnahme,
- Fig. 15: einen Schnitt entlang der Linie XV-XV in Fig. 14,
- Fig. 16: einen Schnitt entlang der Linie XVI-XVI in Fig. 14.

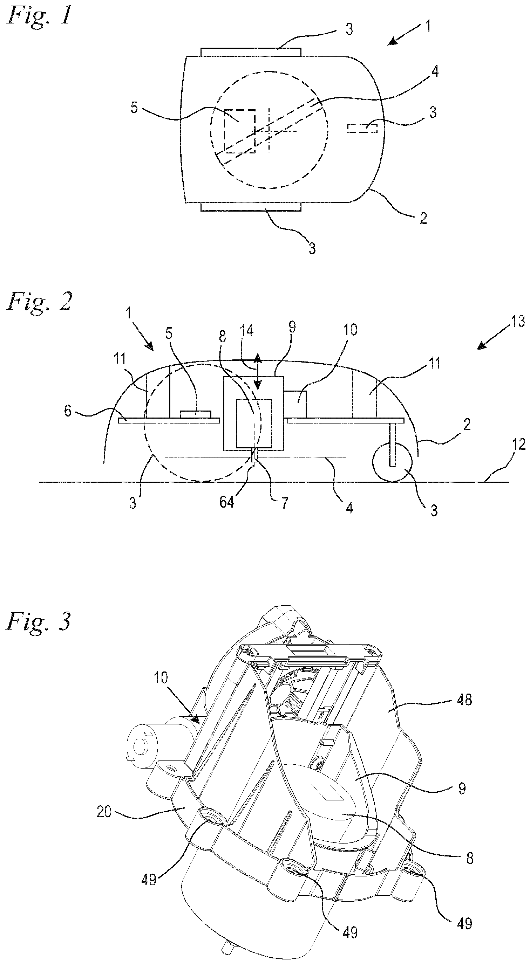

Fig. 1 zeigt als Ausführungsbeispiel für ein selbstfahrendes Arbeitsgerät einen Rasenmäher 1 in schematischer Darstellung. Das selbstfahrende Arbeitsgerät kann jedoch auch ein anderes Arbeitsgerät sein. Der Rasenmäher 1 weist eine Haube 2 auf, die das Werkzeug des Rasenmähers 1, im Ausführungsbeispiel ein schematisch dargestelltes Messer 4, abdeckt. Der Rasenmäher 1 weist außerdem mehrere Räder 3 auf, mit denen der Rasenmäher 1 über den Boden bewegt werden kann.

Fig. 2 zeigt einen schematischen Schnitt durch den Rasenmäher 1. Der Rasenmäher 1 befindet sich in einer Abstellposition 13. In Abstellposition 13 ist der Rasenmäher 1 auf einer ebenen, horizontalen Abstellfläche 12 abgestellt. Die Räder 3 des Rasenmähers 1 stehen dabei auf dem Boden. Im Ausführungsbeispiel weist der Rasenmäher 1 zwei hintere, seitlich angeordnete Räder 3 mit großem Durchmesser sowie ein vorderes, mittig angeordnetes, kleines Rad 3 auf. Das vordere Rad 3 ist im Ausführungsbeispiel unter der Haube 2 angeordnet.

Der Rasenmäher 1 weist ein Chassis 6 auf, an dem die Räder 3 und die Haube 2 fixiert sind. Die Haube 2 stützt sich über Lagerungen 11 an dem Chassis 6 ab. Die Haube 2 ist dabei vorteilhaft begrenzt beweglich gegenüber dem Chassis 6 angeordnet.

Wie Fig. 2 auch zeigt, ist das Messer 4 an einer Antriebswelle 7 eines Antriebsmotors 8 angeordnet. Das Messer 4 wird im Betrieb vom Antriebsmotor 8 um eine Drehachse 64 rotierend angetrieben.

Der Antriebsmotor 8 ist im Ausführungsbeispiel ein Elektromotor. Der Antriebsmotor 8 ist in einer Motoraufnahme 9 angeordnet. Der Antriebsmotor 8 ist an der Motoraufnahme 9 so fixiert, dass der Antriebsmotor 8 mit der Motoraufnahme 9 gegenüber dem Chassis 6 bewegbar ist. Die Motoraufnahme 9 ist gegenüber dem Chassis 6 über eine Einstellvorrichtung 10 in einer vertikalen Richtung 14 verstellbar. Die vertikale Richtung 14 ist die Richtung, die in Abstellposition 13 vertikal verläuft. Die Motoraufnahme 9 bewegt sich beim Einstellvorgang zumindest teilweise in vertikaler Richtung 14, so dass eine Einstellung der Höhenlage des Messers 4 gegenüber dem Boden möglich ist. Die Verstellrichtung kann dabei zur vertikalen Richtung 14 auch geneigt sein. Zur Ansteuerung des Antriebsmotors 8 und der Einstellvorrichtung 10 ist eine Steuerung 5 vorgesehen. Im Ausführungsbeispiel ist die Steuerung 5 am Chassis 6 angeordnet. Auch eine Anordnung an der Motoraufnahme 9 kann jedoch vorteilhaft sein.

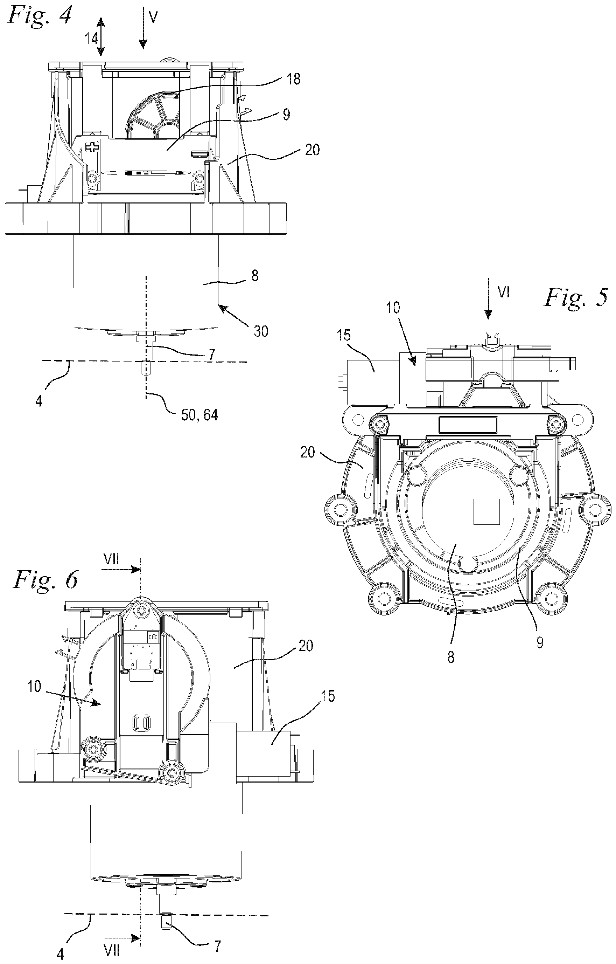

Fig. 3 zeigt perspektivisch den Antriebsmotor 8 und die Motoraufnahme 9 sowie die Einstellvorrichtung 10. Die Einstellvorrichtung 10 umfasst ein Führungsteil 20, das fest mit dem Chassis 6 (Fig. 2) verbunden ist. Im Ausführungsbeispiel sind hierzu Befestigungsöffnungen 49 im Fußbereich des Führungsteil 20 vorgesehen. Im Ausführungsbeispiel umfasst das Führungsteil 20 einen Aufnahmeabschnitt 48, in dem die Motoraufnahme 9 beweglich angeordnet ist. Die Motoraufnahme 9 ist in der in Fig. 4 dargestellten vertikalen Richtung 14 beweglich.

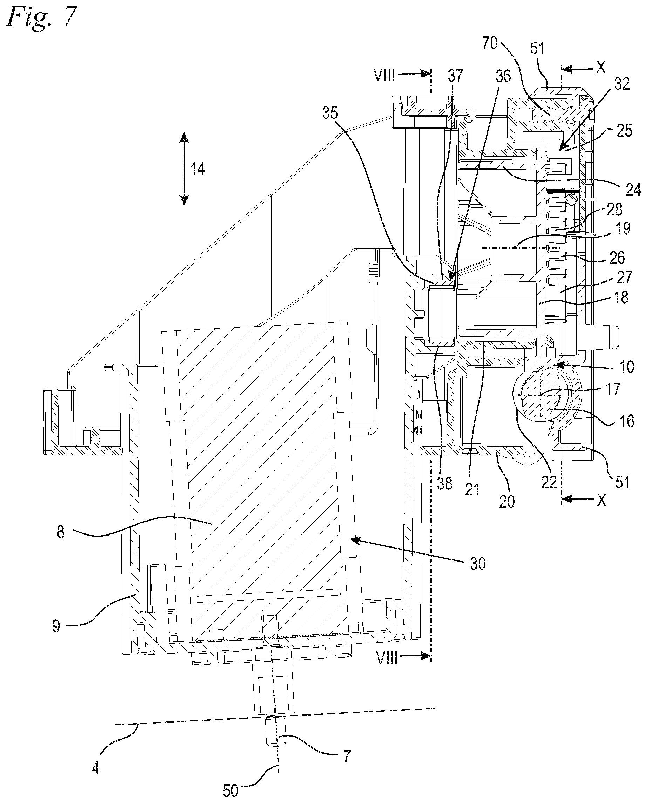

Die Figuren 3 bis 10 zeigen die Motoraufnahme 9 und den Antriebsmotor 8 in einer ersten, unteren Endlage 30. Wie die Figuren 4 bis 6 zeigen, ist die Einstellvorrichtung 10 an einer Seite der Motoraufnahme 9 am Führungsteil 20 angeordnet. Die Einstellvorrichtung 10 umfasst einen Stellmotor 15. Der Stellmotor 15 treibt ein in Fig. 7 dargestelltes Schneckenrad 16 an. Die Drehachse 17 des Schneckenrads 16 ist im Ausführungsbeispiel senkrecht zur Drehachse 50 des Antriebsmotors 8 angeordnet. Die Drehachse 50 des Antriebsmotors 8 fällt mit der Drehachse 64 des Messers 4 zusammen. In Abstellposition 13 (Fig. 2) liegt die Drehachse 17 des Schneckenrads 16 horizontal.

Die Einstellvorrichtung 10 umfasst ein Stellrad 18, das um eine Drehachse 19 drehbar gelagert ist. Die Drehachse 19 ist im Ausführungsbeispiel senkrecht zur Drehachse 17 des Schneckenrads 16 angeordnet. Die Drehachse 19 liegt in Abstellposition 13 horizontal. Das Stellrad 18 ist im Ausführungsbeispiel am Führungsteil 20 gelagert. Das Stellrad 18 weist einen Lagerstutzen 24 auf, der an einer Lagerfläche 21 des Führungsteils 20 drehbar gelagert ist. Vorteilhaft ist die Lagerfläche 21 zylindrisch ausgebildet, und der Lagerstutzen 24 weist nach außen ragende Rippen zur Anlage an der Lagerfläche 21 auf. Auch der Stellmotor 15 und das Schneckenrad 16 sind am Führungsteil 20 gelagert. Im Ausführungsbeispiel greift das Schneckenrad 16 unmittelbar in das Stellrad 18 ein. In alternativer Ausführung können auch weitere Getriebestufen vorgesehen sein.

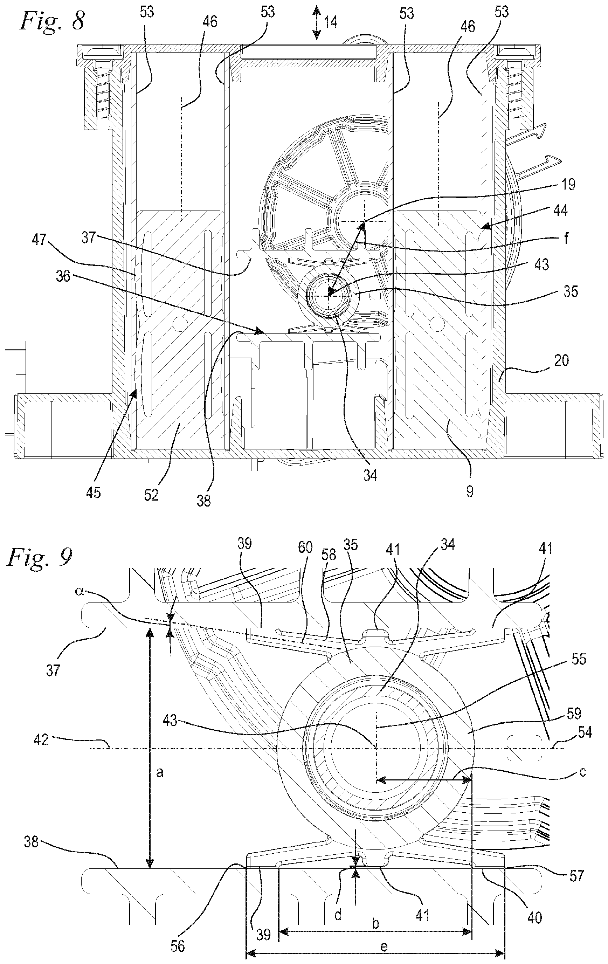

Das Stellrad 18 trägt an seiner der Motoraufnahme 9 zugewandten Seite einen Exzenterzapfen 34 (Fig. 8). Der Exzenterzapfen 34 trägt ein Gleitstück 35, das im Folgenden noch näher beschrieben wird. Das Gleitstück 35 ist am Exzenterzapfen 34 drehbar gelagert. Die Motoraufnahme 9 weist zwei Führungsflächen 37 und 38 auf, zwischen denen der Exzenterzapfen 34 mit dem Gleitstück 35 angeordnet ist. Die Führungsflächen 37 und 38 bilden mit dem Gleitstück 35 eine Führung 36. In Abstellposition 13 ist die Führung 36 horizontal ausgerichtet. Auch eine andere Ausrichtung der Führung 36 kann jedoch vorteilhaft sein. Bei einer Drehung des Stellrads 18 bewegt sich der Exzenterzapfen 34 in vertikaler Richtung 14 und bewirkt dadurch eine Bewegung des Führungsteils 20 in vertikaler Richtung 14. Die durch die Drehung des Stellrads 18 verursachte Bewegung des Exzenterzapfens in horizontaler Richtung, also senkrecht zur vertikalen Richtung 14, bewirkt eine Verschiebung des Gleitstücks 35 gegenüber den Führungsflächen 37 und 38. Bei der Drehbewegung des Stellrads 18 dreht sich der Exzenterzapfen 34 im Gleitstück 35.

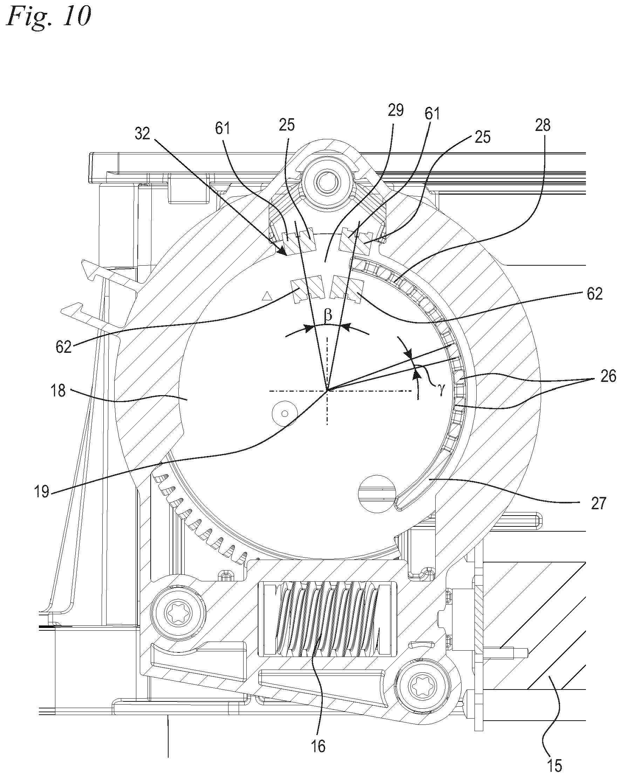

Um die Höhenlage der Motoraufnahme 9 und damit die Höhenlage des Messers 4 erfassen zu können, ist eine Erfassungseinrichtung 32 vorgesehen. Die Erfassungseinrichtung 32 umfasst mindestens ein Erfassungsmittel 25. Im Ausführungsbeispiel sind zwei Erfassungsmittel 25 vorgesehen, wie Fig. 10 zeigt. Die Erfassungsmittel 25 sind dazu ausgebildet, Kodierelemente 26, 27, 28, 29 zu erfassen, wenn sich diese an dem mindestens einen Erfassungsmittel 25 vorbei bewegen. Im Ausführungsbeispiel sind die Erfassungsmittel 25 als optische Erfassungsmittel, beispielsweise Lichtschranken mit Laserlicht, ausgebildet. Die Kodierelemente 26 und 27 werden durch Vorsprünge am Stellrad 18 gebildet. Die Kodierelemente 28 und 29 sind durch fehlende Vorsprünge gebildet. Das Kodierelement 29 ist in Fig. 10 dargestellt. Wie Fig. 10 auch zeigt, sind die Kodierelemente 26 bis 29 auf einer Kreisbahn um die Drehachse 19 angeordnet. Die Kodierelemente 26 bis 29 bewegen sich bei der Drehbewegung des Stellrads 18 an den Erfassungsmitteln 25 vorbei und werden erfasst. Dadurch kann die Drehlage des Stellrads 18 und damit die Höhenlage des Führungsteils 20, des Antriebsmotors 8 und des Messers 4 ermittelt werden.

Wie Fig. 7 zeigt, ist das Schneckenrad 16 in einer Lagerfläche 22 des Führungsteils 20 gelagert. Die Lagerfläche 22 ist bevorzugt als Hohlzylinder ausgebildet. Wie Fig. 7 auch zeigt, sind alle Elemente der Einstellvorrichtung 10 bis auf die Steuerung 5 (Fig. 2) und die Erfassungsmittel 25 unmittelbar am Führungsteil 20 gelagert. Das Führungsteil 20 ist von einem Deckel 51 verschlossen. Am Deckel 51 sind im Ausführungsbeispiel die Erfassungsmittel 25 gehalten. Der Deckel 51 ist am Führungsteil 20 im Ausführungsbeispiel über mindestens eine Schraube 70 fixiert. Die Schraube 70 ist im Deckel 51 mit geringem Spiel geführt, so dass bei der Positionierung des Deckels 51 am Führungsteil 20 ein Ausgleich geringer Toleranzen möglich ist. Auch eine andere Anordnung der Erfassungsmittel 25, insbesondere am Führungsteil 20, kann jedoch vorteilhaft sein.

Fig. 8 zeigt die Lagerung der Motoraufnahme 9 am Führungsteil 20. Die Motoraufnahme 9 und das Führungsteil 20 bilden zwei Linearführungen 44 und 45. Die Längsrichtung 46 der Linearführungen 44 und 45 ist in Abstellposition 13 in vertikaler Richtung 14 ausgerichtet. Die Linearführungen 44 und 45 weisen jeweils ein Führungsstück 52 auf, das zwischen die einander gegenüberliegenden Gleitbahnen 53 jeder Linearführung 44, 45 ragt und zwischen diesen geführt ist. Im Ausführungsbeispiel ist die erste Linearführung 44 als Festlager und die zweite Linearführung 45 als Loslager ausgebildet. Die erste Linearführung 44 lässt keine Bewegung der Motoraufnahme 9 gegenüber der Führung 20 in Richtung senkrecht zur Längsrichtung 46 zu. Das Führungsstück 52 ist zwischen den Gleitbahnen 53 im Rahmen der Fertigungstoleranzen vorteilhaft spielfrei geführt. Die zweite Linearführung 45 weist zum Ausgleich von Toleranzen und Längenänderungen elastische Abschnitte 47 auf, an denen sich das Führungsstück 52 der Motoraufnahme 9, das zwischen die einander gegenüberliegenden Gleitbahnen 53 der Linearführung 45 ragt, verformen kann. Die elastischen Abschnitte 47 lassen dadurch eine Relativbewegung des Führungsteils 20 gegenüber den Gleitbahnen 53 senkrecht zur Längsrichtung 46 zu.

Die Figuren 8 und 9 zeigen auch den Exzenterzapfen 34 mit dem Gleitstück 35 und der Führung 36. Wie Fig. 8 zeigt, ist der Exzenterzapfen 34 im Ausführungsbeispiel als Hohlzapfen ausgebildet. Wie Fig. 9 zeigt, weist der Exzenterzapfen 34 eine Mittelachse 43 auf. Wie Fig. 8 zeigt, weist die Drehachse 19 des Stellrads 18 zur Mittelachse 43 des Exzenterzapfens 34 einen Abstand f auf. Vorteilhaft beträgt der Weg, den das Messer 4 zwischen der oberen Endlage 31 und der unteren Endlage 30 zurücklegt, weniger als das Doppelte des Abstands f, insbesondere weniger als das 1,8fache des Abstands f.

Das Gleitstück 35 ist im Ausführungsbeispiel spiegelsymmetrisch zu einer zwischen den Führungen 37 und 38 liegenden ersten Symmetrieebene 54 ausgebildet. Die erste Symmetrieebene 54 ist in Längsrichtung 42 der Führung 36 ausgerichtet. Das Gleitstück 35 ist im Ausführungsbeispiel außerdem symmetrisch zu einer zweiten Symmetrieebene 55 ausgebildet, die senkrecht zur ersten Symmetrieebene 54 und durch die Mittelachse 43 verläuft. Das Gleitstück 35 weist mindestens eine Gleitfläche 39, 40 auf. Mit der mindestens einen Gleitfläche 39, 40 liegt das Gleitstück 35 an mindestens einer Führungsfläche 37, 38 an. Im Ausführungsbeispiel sind zwei Gleitflächen 39, 40 an jeder Führungsfläche 37 und 38 vorgesehen. Die Gleitflächen 39 weisen eine, der anderen an dieser Führungsfläche 37, 38 anliegenden Gleitfläche 40 entfernt liegende, außenliegende Seite 56 auf. Die Gleitflächen 40 weisen eine, der anderen Gleitfläche 39 entfernt liegende, außenliegende Seite 57 auf. Die außenliegenden Seiten 56, 57 weisen einen Abstand e zueinander auf. Die Führungsflächen 37 und 38 sind parallel zueinander ausgerichtet und weisen einen Abstand a zueinander auf. Der Abstand a kann beispielsweise einige Zentimeter betragen. Der Abstand e beträgt vorteilhaft mindestens 50 %, insbesondere mindestens 80 % des Abstands a der Führungsflächen 37 und 38. Dadurch wird ein Verkippen oder Verkanten des Gleitstücks 35 zwischen den Führungsflächen 37 und 38 verhindert.

Das Gleitstück 35 weist eine Nabe 59 auf, die den Exzenterzapfen 34 umgibt. Im Ausführungsbeispiel ist zwischen der Nabe 59 und dem Exzenterzapfen 34 ein Gleitlager gebildet. Von der Nabe 59 erstrecken sich jeweils zwei Arme 58 in Richtung auf jede Führungsfläche 37 und 38. Die Arme 58 sind elastisch ausgebildet, so dass die Gleitflächen 39 und 40 elastisch vorgespannt an den Führungsflächen 37 und 38 anliegen. Die Arme 58 weisen eine Mittelachse 60 auf, die gegenüber den Führungsflächen 37 und 38 sehr flach verläuft. Die Mittelachse 60 schließt mit einer zugeordneten Führungsfläche 37, 38 vorteilhaft einen Winkel α von weniger als 30°, insbesondere von weniger als 20° ein.

Die Gleitflächen 39 und 40 weisen vorteilhaft einen parallel zu den Führungsflächen 37 und 38 gemessenen Abstand b auf. Der Abstand b der beiden Gleitflächen 39 und 40 beträgt vorteilhaft mindestens 30 %, insbesondere mindestens 50 % des Abstands a der Führungsflächen 37 und 38.

Um sicherzustellen, dass die Arme 58 nicht überbelastet werden können, ist mindestens ein Anschlag 41 vorgesehen, der die Verformung eines Arms 58 begrenzt. Vorteilhaft ist benachbart zu jedem Arm 58 ein Anschlag 41 vorgesehen. Im Ausführungsbeispiel ist an jeder Führungsfläche 37 und 38 ein Anschlag 41 vorgesehen, der zwischen zwei Gleitflächen 39 und 40 ragt. In dem in Fig. 9 dargestellten unbelasteten Zustand weist der Anschlag 41 einen Abstand d zur zugeordneten Führungsfläche 37, 38 auf. Wird das Schneckenrad 16 gedreht und der Exzenterzapfen 34 dadurch bewegt, so kann der Anschlag 41, der in Bewegungsrichtung des Exzenterzapfens 34 vorne liegt, an der zugeordneten Führungsfläche 37, 38 anschlagen und so eine gute Übertragung der Stellbewegung sicherstellen. Der Anschlag 41 ist zwischen den Gleitflächen 39 und 40 angeordnet. Die Gleitflächen 39 und 40 weisen einen parallel zu den Führungsflächen 37 und 38 gemessenen Abstand c zur Mittelachse 43 des Exzenterzapfens 34 auf. Der Abstand c ist im Ausführungsbeispiel größer als der Radius des Exzenterzapfens 34. Im Ausführungsbeispiel weisen alle Gleitflächen 39, 40 des Gleitstücks 35 zur Mittelachse 43 des Exzenterzapfens 34 den gleichen, in Längsrichtung 42 der Führung 36 gemessenen Abstand auf.

In Fig. 10 ist die Erfassungseinrichtung 32 im Einzelnen gezeigt. Das Stellrad 18 trägt die kreisförmig um die Drehachse 19 angeordneten Kodierelemente 26 bis 29. Die Kodierelemente 26 und 27 sind als Vorsprünge ausgebildet. Jedes Erfassungsmittel 25 weist einen Sender 61 und einen Empfänger 62 auf. Die Anordnung der Sender 61 und Empfänger 62 kann auch vertauscht sein. Im Ausführungsbeispiel sind die Erfassungsmittel 25 optische Erfassungsmittel, und die Sender 61 emittieren Licht, insbesondere Laserlicht, und die Empfänger 62 empfangen das Licht und werten die empfangene Lichtintensität aus. Gelangt ein Vorsprung eines Kodierelements 26 oder 27 zwischen Sender 61 und Empfänger 62 eines Erfassungsmittel 25, so wird der Empfänger 62 abgedeckt und das vom Sender 61 empfangene Signal geschwächt. Im Ausführungsbeispiel sind die Erfassungsmittel 25 optische Erfassungsmittel. Die Erfassungsmittel 25 können jedoch auch andere Arten von Erfassungsmitteln 25, beispielsweise magnetische Erfassungsmittel 25 wie Hallsensoren, die mit die Kodierelemente bildenden Magneten zusammenwirken, mechanische Schalter oder elektrische Kontakte, beispielsweise Schleifkontakte oder dgl. sein.

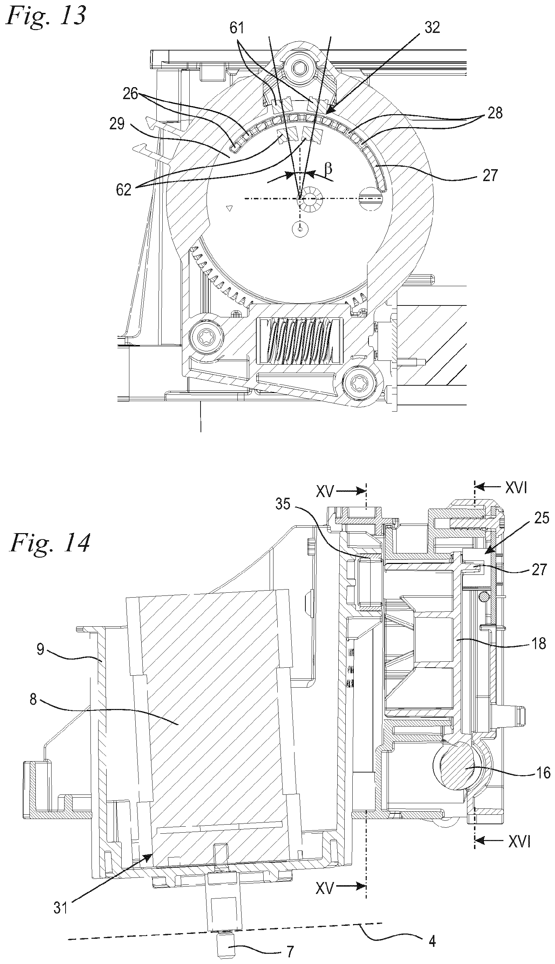

Die beiden Erfassungsmittel 25 sind in einem Winkelabstand β zueinander angeordnet. Der Winkelabstand β ist größer als der Umfangswinkel, über den sich ein Kodierelement 26 oder 28 erstreckt. Der Winkelabstand β ist dabei zwischen den Mittelachsen der Erfassungsmittel 25 gemessen. Die Kodierelemente 28 sind durch einen fehlenden Vorsprung, also die Lücke zwischen zwei aufeinanderfolgenden Kodierelementen 26 gebildet. Die Kodierelemente 26 und 28 erstrecken sich jeweils über einen Winkel y, der beispielsweise das 1,5fache des Winkelabstands β betragen kann. Vorzugsweise sind der Winkelabstand β und der Winkel γ so aufeinander abgestimmt, dass in einem Bereich zwischen den Endlagen 30 (Fig. 7) und 31 (Fig. 14) des Messers 4 in jeder Position nur eines der Erfassungsmittel 25 von einem Kodierelement 26 abgedeckt ist.

In der in den Figuren 3 bis 10 dargestellten unteren Endlage 30 (Fig. 4) des Messers 4 und der Motoraufnahme 9 ist ein Kodierelement 29 im Bereich eines der Erfassungsmittel 25 angeordnet. Das Kodierelement 29 erstreckt sich über einen Winkelabstand, der mindestens dem Winkel β entspricht. Das Kodierelement 29 ist im Ausführungsbeispiel ein fehlender Vorsprung. Empfangen beide Empfänger 62 der Erfassungsmittel 25 ein nicht abgeschwächtes Signal, befindet sich die Motoraufnahme 9 daher in ihrer ersten, unteren Endlage 30.

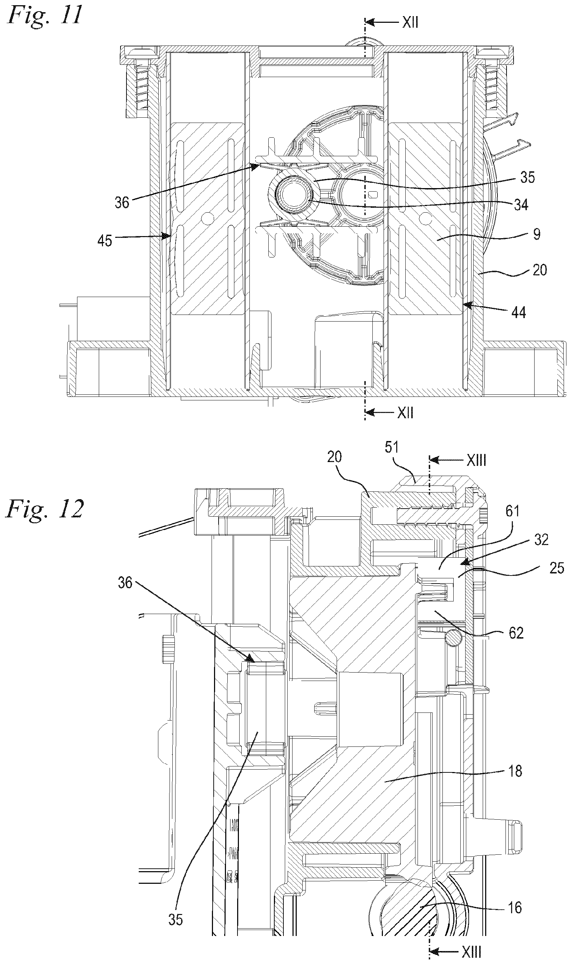

Bewegt sich die Motoraufnahme 9 aus der unteren Endlage 30 in Richtung auf ihre obere Endlage 31 (Figuren 14 bis 16), so bewegen sich die Kodierelemente 26 und 27 an den Erfassungsmitteln 25 vorbei. Die Empfänger 62 sind in jeder Position teilweise von den Kodierelementen 26 verdeckt, so dass das Empfangssignal schwächer als in der ersten, unteren Endlage 30 ist. Die wechselnde Signalstärke kann von der Steuerung 5 ausgewertet werden. Durch Zählen der an den Erfassungsmitteln 25 vorbeigeführten Kodierelementen 26 und 27 kann die Position der Motoraufnahme 9 ausgehend von einer Endlage 30, 31 ermittelt werden. Aufgrund des Exzenterzapfens 34, der sich in vertikaler Richtung 14 nichtlinear zum Verstellwinkel des Stellrads 18 verändert, ergibt sich ein nichtlinearer Zusammenhang zwischen der Anzahl der an den Erfassungsmitteln 25 vorbeigeführten Kodierelemente 26, 27 und der von der Motoraufnahme 9 und dem Messer 4 zurückgelegten Strecke. Dies ist bei der Auswertung zu berücksichtigen. In den Figuren 11 bis 13 ist die Anordnung in einer mittleren Lage der Motoraufnahme 9 und des Messers 4 dargestellt. Der Exzenterzapfen 34 hat sich von der unteren Endlage 30 zu der mittleren Lage gegenüber den Führungsflächen 37 und 38 von einer zu seiner anderen horizontalen Endlage bewegt. Von der mittleren Lage zur oberen Endlage 31 bewegt sich der Exzenterzapfen 34 wieder zurück in seine Ausgangslage. Bevorzugt befindet sich das Gleitstück 35 in der ersten Endlage 30 und der zweiten Endlage 31 relativ zu den Führungsflächen 37 und 38 in der gleichen Position.

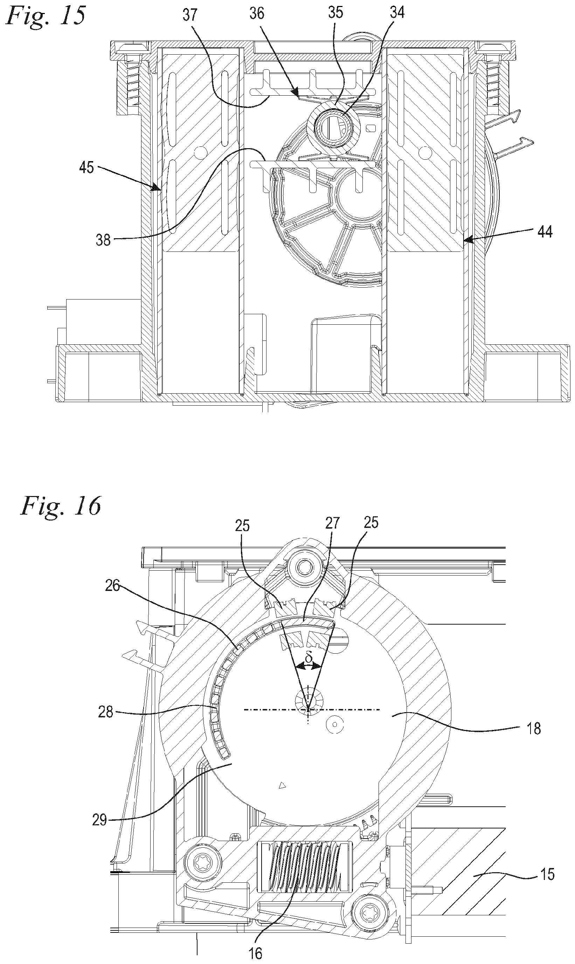

Fig. 14 zeigt die Motoraufnahme 9 in ihrer zweiten, oberen Endlage 31. In dieser Position ist ein Kodierelement 27 im Bereich der Erfassungsmittel 25 angeordnet. Das Kodierelement 27 für die zweite, obere Endlage 31 unterscheidet sich von dem Kodierelement 29 für die erste, untere Endlage 30. Die Kodierelemente 27 und 29 unterscheiden sich auch von den Kodierelementen 26 und 28 für Positionen zwischen den Endlagen 30 und 31. Fig. 16 zeigt die Anordnung des Kodierelements 27 im Bereich der Erfassungsmittel 25. Wie Fig. 16 zeigt, sind beide Empfänger 62 der Erfassungsmittel 25 zumindest teilweise vom Kodierelement 27 abgedeckt. Dadurch ist die zweite, obere Endlage 31 für die Steuerung 50 eindeutig erkennbar. Das Gleitstück 35 hat sich bei der Bewegung der Motoraufnahme 9 von der unteren Endlage 30 zur oberen Endlage 31 in Richtung auf die zweite Linearführung 44 und zurück bewegt.

## Patentansprüche

1. Selbstfahrendes Arbeitsgerät, insbesondere Rasenmäher, mit einem Chassis (6), mit mindestens einem Werkzeug und mit einem Antriebsmotor (8) zum Antrieb des Werkzeugs, wobei das Werkzeug gegenüber dem Chassis (6) höhenverstellbar ist, wobei eine Einstellvorrichtung (10) zur Einstellung der Relativposition des Werkzeugs gegenüber dem Chassis (6) vorgesehen ist, wobei die Einstellvorrichtung (10) einen Stellmotor (15) und ein Stellrad (18) umfasst, wobei sich das Stellrad (18) zwischen einer ersten, unteren Endlage (30) des Werkzeugs und einer zweiten, oberen Endlage (31) des Werkzeugs um weniger als eine volle Umdrehung dreht,
**dadurch gekennzeichnet, dass** eine Erfassungseinrichtung (32) zur Erfassung der Höhenlage des Werkzeugs vorgesehen ist, die Kodierelemente (26, 27, 28) an dem Stellrad (18) und mindestens ein Erfassungsmittel (25) umfasst, wobei sich das mindestens eine erste Kodierelement (27) für die erste Endlage (30) von dem mindestens einen zweiten Kodierelement (28) für die zweite Endlage (31) unterscheidet.

2. Arbeitsgerät nach Anspruch 1,
**dadurch gekennzeichnet, dass** zwei Erfassungsmittel (25) vorgesehen sind, die in vorgegebenem Abstand zueinander angeordnet sind.

3. Arbeitsgerät nach Anspruch 1 oder 2,
**dadurch gekennzeichnet, dass** die Kodierelemente (26, 27, 28, 29) durch Vorsprünge (33) und durch das Fehlen von Vorsprüngen gebildet sind.

4. Arbeitsgerät nach einem der Ansprüche 1 bis 3,
**dadurch gekennzeichnet, dass** die Erfassungsmittel (25) optische Erfassungsmittel sind.

5. Arbeitsgerät nach einem der Ansprüche 1 bis 4,
**dadurch gekennzeichnet, dass** das Stellrad (18) und das mindestens eine Erfassungsmittel (25) fest mit einem einteilig ausgebildeten Führungsteil (20) verbunden sind.

6. Arbeitsgerät nach einem der Ansprüche 1 bis 5,
**dadurch gekennzeichnet, dass** die Einstellvorrichtung (10) ein von dem Stellmotor (15) angetriebenes Schneckenrad (16) umfasst.

7. Arbeitsgerät nach Anspruch 6,
**dadurch gekennzeichnet, dass** das Schneckenrad (16) an dem Führungsteil (20) gelagert ist.

8. Arbeitsgerät nach Anspruch 6 oder 7,
**dadurch gekennzeichnet, dass** das Schneckenrad (16) in das Stellrad (18) eingreift.

9. Arbeitsgerät nach einem der Ansprüche 1 bis 8,
**dadurch gekennzeichnet, dass** das Stellrad (18) als Stirnrad ausgebildet ist.

10. Arbeitsgerät nach einem der Ansprüche 1 bis 9,
**dadurch gekennzeichnet, dass** der Antriebsmotor (8) an dem Chassis (6) über mindestens eine, insbesondere über zwei Linearführungen (44, 45) geführt ist.

11. Arbeitsgerät nach Anspruch 10,
**dadurch gekennzeichnet, dass** eine Linearführung (45) eine Bewegung des Antriebsmotors (8) gegenüber dem Chassis (6) quer zur Längsrichtung (46) der Linearführung (45) zulässt.

12. Arbeitsgerät nach Anspruch 11,
**dadurch gekennzeichnet, dass** der Antriebsmotor (8) in einer Motoraufnahme (9) angeordnet ist, und dass die Motoraufnahme (9) einen elastischen Abschnitt (47) aufweist, der sich an der Linearführung (45) abstützt.

13. Arbeitsgerät nach einem der Ansprüche 10 bis 12,
**dadurch gekennzeichnet, dass** die Linearführung (44, 45) an dem Führungsteil (20) ausgebildet ist.

14. Arbeitsgerät nach einem der Ansprüche 1 bis 13,
**dadurch gekennzeichnet, dass** die Drehachse (19) des Stellrads (18) senkrecht zur Verstellrichtung der Einstellvorrichtung (10) verläuft, und dass das Stellrad (18) in einem Abstand zu seiner Drehachse (19) mit dem Antriebsmotor (8) gekoppelt ist.

## Claims

1. Self-propelled work implement, in particular lawnmower, with a chassis (6), with at least one tool and with a drive motor (8) for driving the tool, wherein the tool is height-adjustable with respect to the chassis (6), wherein a setting apparatus (10) is provided to set the relative position of the tool with respect to the chassis (6), wherein the setting apparatus (10) comprises an actuating motor (15) and a setting gear (18), wherein the setting gear (18) rotates by less than one full revolution between a first, lower end position (30) of the tool and a second, upper end position (31) of the tool,
**characterized in that** a detection device (32) is provided to detect the height position of the tool, which detection device comprises encoding elements (26, 27, 28) on the setting gear (18) and at least one detection means (25), wherein the at least one first encoding element (27) for the first end position (30) differs from the at least one second encoding element (28) for the second end position (31).

2. Work implement according to Claim 1,
**characterized in that** two detection means (25) are provided which are arranged at a predefined spacing from one another.

3. Work implement according to Claim 1 or 2,
**characterized in that** the encoding elements (26, 27, 28, 29) are formed by projections (33) and by the absence of projections.

4. Work implement according to one of Claims 1 to 3,
**characterized in that** the detection means (25) are optical detection means.

5. Work implement according to one of Claims 1 to 4,
**characterized in that** the setting gear (18) and the at least one detection means (25) are connected fixedly to a guide part (20) of single-part configuration.

6. Work implement according to one of Claims 1 to 5,
**characterized in that** the setting apparatus (10) comprises a worm gear (16) which is driven by the actuating motor (15).

7. Work implement according to Claim 6,
**characterized in that** the worm gear (16) is mounted on the guide part (20).

8. Work implement according to Claim 6 or 7,
**characterized in that** the worm gear (16) engages into the setting gear (18).

9. Work implement according to one of Claims 1 to 8,
**characterized in that** the setting gear (18) is configured as a spur gear.

10. Work implement according to one of Claims 1 to 9,
**characterized in that** the drive motor (8) is guided on the chassis (6) via at least one linear guide, in particular via two linear guides (44, 45).

11. Work implement according to Claim 10,
**characterized in that** one linear guide (45) permits a movement of the drive motor (8) with respect to the chassis (6) transversely with respect to the longitudinal direction (46) of the linear guide (45).

12. Work implement according to Claim 11,
**characterized in that** the drive motor (8) is arranged in a motor mount (9), and **in that** the motor mount (9) has an elastic portion (47) which is supported on the linear guide (45).

13. Work implement according to one of Claims 10 to 12,
**characterized in that** the linear guide (44, 45) is configured on the guide part (20).

14. Work implement according to one of Claims 1 to 13,
**characterized in that** the rotational axis (19) of the setting gear (18) runs perpendicularly with respect to the adjusting direction of the setting apparatus (10), and **in that** the setting gear (18) is coupled at a spacing from its rotational axis (19) to the drive motor (8).

## Revendications

1. Appareil de travail automoteur, en particulier tondeuse à gazon, avec un châssis (6), avec au moins un outil et avec un moteur d'entraînement (8) pour l'entraînement de l'outil, l'outil étant réglable en hauteur par rapport au châssis (6), un dispositif de réglage (10) étant prévu pour le réglage de la position relative de l'outil par rapport au châssis (6), le dispositif de réglage (10) comprenant un servomoteur (15) et une roue de réglage (18), la roue de réglage (18) tournant entre une première position, de fin de course inférieure (30) de l'outil, et une deuxième position, de fin de course supérieure (31) de l'outil, de moins d'un tour complet,
**caractérisé en ce qu'**il est prévu un dispositif de détection (32) pour détecter la position en hauteur de l'outil, qui comprend des éléments de codage (26, 27, 28) sur la roue de réglage (18) et au moins un moyen de détection (25), l'au moins un premier élément de codage (27) pour la première position de fin de course (30) étant distinct de l'au moins un deuxième élément de codage (28) pour la deuxième position de fin de course (31).

2. Appareil de travail selon la revendication 1,
**caractérisé en ce qu'**il est prévu deux moyens de détection (25) qui sont agencés à une distance prédéfinie l'un de l'autre.

3. Appareil de travail selon la revendication 1 ou 2,
**caractérisé en ce que** les éléments de codage (26, 27, 28, 29) sont formés par des protubérances (33) et par une absence de protubérances.

4. Appareil de travail selon l'une des revendications 1 à 3,
**caractérisé en ce que** les moyens de détection (25) sont des moyens de détection optiques.

5. Appareil de travail selon l'une des revendications 1 à 4,
**caractérisé en ce que** la roue de réglage (18) et ledit au moins un moyen de détection (25) sont reliés de manière fixe à une pièce de guidage (20) réalisée d'un seul tenant.

6. Appareil de travail selon l'une des revendications 1 à 5,
**caractérisé en ce que** le dispositif de réglage (10) comprend une vis sans fin (16) entraînée par le servomoteur (15).

7. Appareil de travail selon la revendication 6,
**caractérisé en ce que** la vis sans fin (16) est montée sur la pièce de guidage (20).

8. Appareil de travail selon la revendication 6 ou 7,
**caractérisé en ce que** la vis sans fin (16) engrène dans la roue de réglage (18).

9. Appareil de travail selon l'une des revendications 1 à 8,
**caractérisé en ce que** la roue de réglage (18) est conçue sous la forme d'un pinion droit.

10. Appareil de travail selon l'une des revendications 1 à 9,
**caractérisé en ce que** le moteur d'entraînement (8) est guidé sur le châssis (6) par au moins un guide linéaire, en particulier par deux guides linéaires (44, 45).

11. Appareil de travail selon la revendication 10, **caractérisé en ce qu'**un guide linéaire (45) autorise un déplacement du moteur d'entraînement (8) par rapport au châssis (6) transversalement à la direction longitudinale (46) du guide linéaire (45).

12. Appareil de travail selon la revendication 11, **caractérisé en ce que** le moteur d'entraînement (8) est agencé dans un logement de moteur (9), et **en ce que** le logement de moteur (9) présente une partie élastique (47) qui s'appuie sur le guide linéaire (45).

13. Appareil de travail selon l'une des revendications 10 à 12, **caractérisé en ce que** le guide linéaire (44, 45) est formé sur la pièce de guidage (20).

14. Appareil de travail selon l'une des revendications 1 à 13,
**caractérisé en ce que** l'axe de rotation (19) de la roue de réglage (18) est perpendiculaire à la direction de réglage du dispositif de réglage (10), et **en ce que** la roue de réglage (18) est reliée au moteur d'entraînement (8) à une distance de son axe de rotation (19).
